(19) Europäisches Patentamt
European Patent Office
Office européen des brevets

(11) EP 4 500 137 B1

(12) **FASCICULE DE BREVET EUROPEEN**

(45) Date de publication et mention de la délivrance du brevet:
**18.03.2026 Bulletin 2026/12**

(21) Numéro de dépôt: **23712559.6**

(22) Date de dépôt: **22.03.2023**

(51) Classification Internationale des Brevets (IPC):
***G01M 3/26*** *(2006.01)* ***E03B 7/00*** *(2006.01)*
***F17D 5/02*** *(2006.01)*

(52) Classification Coopérative des Brevets (CPC):
**G01M 3/26**

(86) Numéro de dépôt international:
**PCT/EP2023/057367**

(87) Numéro de publication internationale:
**WO 2023/180396 (28.09.2023 Gazette 2023/39)**

(54) **PROCEDE DE DETECTION D’UNE ANOMALIE DE CONSOMMATION D’UN FLUIDE D’INTERET PAR UN SYSTÈME CONSOMMATEUR**

VERFAHREN ZUR ERKENNUNG EINER ANOMALIE BEIM VERBRAUCH EINER FLÜSSIGKEIT VON INTERESSE DURCH EIN VERBRAUCHSSYSTEM

METHOD FOR DETECTING AN ANOMALY IN CONSUMPTION OF A FLUID OF INTEREST BY A CONSUMING SYSTEM

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **25.03.2022 FR 2202684**

(43) Date de publication de la demande:
**05.02.2025 Bulletin 2025/06**

(73) Titulaire: **Smart and Blue**
**38000 Grenoble (FR)**

(72) Inventeur: **DEIROS QUINTANILLA, Ivan**
**38000 Grenoble (FR)**

(74) Mandataire: **Santarelli**
**Tour Trinity**
**1 bis Place de la Défense**
**92400 Courbevoie (FR)**

(56) Documents cités:
**WO-A1-2007/059592** **CN-A- 105 185 051**
**US-A1- 2018 143 056**

Il est rappelé que: Dans un délai de neuf mois à compter de la publication de la mention de la délivrance du brevet européen au Bulletin européen des brevets, toute personne peut faire opposition à ce brevet auprès de l’Office européen des brevets, conformément au règlement d’exécution. L’opposition n’est réputée formée qu’après le paiement de la taxe d’opposition. (Art. 99(1) Convention sur le brevet européen).

EP 4 500 137 B1

## Description

### DOMAINE TECHNIQUE

Le domaine de l'invention est celui de la consommation d'un fluide d'intérêt par un système consommateur, par exemple la consommation d'eau liquide par une maison d'habitation, un immeuble, une école, un hôpital, etc... L'invention porte plus précisément sur la surveillance et la détection d'une anomalie de consommation du fluide d'intérêt par le système consommateur.

### ÉTAT DE LA TECHNIQUE ANTÉRIEURE

Un système consommateur d'un fluide d'intérêt peut être une maison, un immeuble, une école, un hôpital, une usine, un hôtel d'entreprise, etc... Il comporte plusieurs dispositifs consommateurs du fluide d'intérêt, raccordé par un circuit fluidique à une source. Dans le cas d'une usine, le fluide d'intérêt peut être un liquide comme de l'eau, de l'hydrogène, de l'oxygène, de l'azote etc... Dans le cas d'une maison d'habitation, le fluide d'intérêt peut être de l'eau liquide, et les dispositifs consommateurs peuvent correspondre à un lave-vaisselle, un lave-linge, une douche, des toilettes à chausse d'eau, et aux différents robinets (salle de bain, cuisine...).

Les documents US 2018/143056 A1, WO 2007/059592 A1, et CN 105 185 051 A décrivent des exemples de procédés de détection d'une anomalie de consommation d'un fluide. Cependant, il existe un besoin de disposer d'un procédé permettant de détecter efficacement la présence d'une anomalie dans la consommation du fluide d'intérêt, comme par exemple une fuite intermittente ou continue, ou un robinet mal fermé.

### EXPOSÉ DE L'INVENTION

L'invention a pour objectif de proposer un procédé qui permette de détecter efficacement et simplement une anomalie de consommation d'un fluide d'intérêt par un système consommateur, tout en tenant compte d'une éventuelle évolution de la consommation du fluide d'intérêt par le système consommateur, d'une durée de surveillance à l'autre.

Pour cela, l'objet de l'invention est un procédé de détection d'une anomalie de consommation d'un fluide d'intérêt par un système consommateur. Le système consommateur comporte :

- au moins un dispositif consommateur du fluide d'intérêt, raccordé à une source par un circuit fluidique ;
- un dispositif de mesure, raccordé au circuit fluidique entre la source et le dispositif consommateur, adapté à mesurer et à transmettre à une unité de traitement un signal de mesure Sm représentatif d'une variation, au cours d'une durée de surveillance $\Delta t_s$ prédéfinie, d'un débit moyen D du fluide d'intérêt et d'une durée d'écoulement $\Delta t_{e|D}$ associée au débit moyen D ;
- l'unité de traitement, adaptée à déterminer à partir du signal de mesure Sm, un profil de consommation correspondant à une variation en fonction du débit moyen D d'un indicateur d'écoulement représentatif d'une proportion $\%\Delta t_s$ d'une durée d'écoulement cumulée $\Delta t_{ec|D}$ du fluide d'intérêt au cours de la durée de surveillance.

Le procédé de détection comporte les étapes suivantes :

a) fournir une base de données comportant une pluralité de profils de consommation préalablement identifiés comme étant sans anomalie de consommation ;
b) déterminer un seuil d'anomalie $Sa_{(ic)}$, pour au moins une valeur dite de référence de débit moyen, à partir des profils de consommation de la base de données ;
c) acquérir, par le dispositif de mesure, un signal de mesure $Sm_{(ic)}$ dit courant, au cours d'une durée de surveillance $\Delta t_{s(ic)}$ ;
d) déterminer, par l'unité de traitement, un profil de consommation dit courant à partir du signal de mesure $Sm_{(ic)}$ courant ;
e) comparer le profil de consommation courant au seuil d'anomalie $Sa_{(ic)}$ :

- si le profil de consommation courant présente, pour au moins une valeur de référence du débit moyen, une valeur en-deçà du seuil d'anomalie $Sa_{(ic)}$ : identifier une absence d'anomalie de consommation et ajouter le profil de consommation courant dans la base de données, puis réitérer les étapes b) à e) pour une durée de surveillance suivante $\Delta t_{s(ic+1)}$ ;
- si le profil de consommation courant présente, pour au moins une valeur de référence du débit moyen, une valeur au moins au-delà du seuil d'anomalie $Sa_{(ic)}$ : identifier la présence d'une anomalie de consommation et ne pas ajouter le profil de consommation courant dans la base de données, puis réitérer les étapes c) à e) pour une durée

de surveillance suivante $\Delta t_{s(ic+1)}$.

Certains aspects préférés mais non limitatifs de ce procédé de détection sont les suivants.

L'étape a) de fourniture de la base de données peut comporter les étapes suivantes : a1) acquérir, par le dispositif de mesure, un signal de mesure $Sm_{(n)}$ au cours d'une durée de surveillance $\Delta t_{s(n)}$ ; a2) déterminer, par l'unité de traitement, un profil de consommation à partir du signal de mesure $Sm_{(n)}$, identifié comme étant sans anomalie de consommation, et ajouter le profil de consommation déterminé dans la base de données ; réitérer les étapes a1) et a2) jusqu'à ce que la base de données comporte un nombre N de profils de consommation au moins égal à un nombre minimal $N_{min}$ prédéfini.

L'étape d'ajout du profil de consommation courant dans la base de données peut comporter une comparaison du nombre N de profils de consommation de la base de données, et si ce nombre N est supérieur à un nombre maximal $N_{max}$ prédéfini, une suppression du profil de consommation associé à la durée de surveillance la plus ancienne.

L'étape de détermination du profil de consommation peut comporter une détermination d'une variation, en fonction du débit moyen, de la durée d'écoulement cumulée par addition des valeurs des durées d'écoulement associées à une même valeur de débit moyen.

Chaque profil de consommation peut être déterminé au moyen des étapes suivantes : déterminer une fonction de répartition $F_D(d)$ à partir de la variation de la durée d'écoulement cumulée en fonction du débit moyen, la fonction de répartition indiquant une probabilité $P(D \leq d)$ d'obtenir une valeur du débit moyen D inférieure ou égale à une valeur d ; définir le profil de consommation comme étant égal à $1\text{-}F_D(d)$ ou à $F_D(d)$.

En variante, chaque profil de consommation peut être déterminé par calcul d'un rapport de la durée d'écoulement cumulée sur la durée de surveillance, en fonction du débit moyen.

L'étape de détermination du seuil d'anomalie peut comporter un calcul d'une moyenne ou d'une médiane des valeurs des profils de consommation de la base de données, pour au moins une valeur de référence prédéfinie du débit moyen.

L'étape de détermination du seuil d'anomalie peut comporter en outre un calcul d'un écart-type associé aux valeurs des profils de consommation de la base de données, pour au moins une valeur de référence prédéfinie du débit moyen.

Le dispositif de mesure peut comporter un compteur à débitmètre ou un compteur à impulsions.

Le fluide d'intérêt peut être un liquide ou un gaz, choisi parmi l'eau, l'hydrogène, l'oxygène, l'azote et l'hélium.

Le système consommateur peut être une maison, un immeuble comportant plusieurs appartements, une usine, un hôpital, une école, un camping.

Le système consommateur peut comporter une pluralité de dispositifs consommateurs, le dispositif de mesure étant raccordé au circuit fluidique entre la source et les dispositifs consommateurs.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

la figure 1 est une vue schématique et partielle d'un système consommateur, comportant des dispositifs consommateurs du fluide d'intérêt, un dispositif de mesure et une unité de traitement permettant de détecter la présence ou non d'une anomalie de consommation ;

la figure 2 est un organigramme d'un procédé de détection d'une anomalie de consommation du fluide d'intérêt par le système consommateur, selon un premier mode de réalisation ;

la figure 3A illustre un exemple de profils de consommation $\%\Delta t_{s|D(ic)}(d)$ issus de signaux de mesure acquis par un compteur d'eau à débitmètre ;

la figure 3B illustre trois types de profils de consommation $\%\Delta t_{s|D(ic)}(d)$ issus de signaux de mesure acquis par un compteur d'eau à impulsions ;

la figure 3C illustre un autre exemple de profils de consommation $\%\Delta t_{s|D(ic)}(d)$ issus de signaux de mesure acquis par un compteur d'eau à impulsions ;

la figure 4 est un organigramme d'un procédé de détection d'une anomalie de consommation du fluide d'intérêt par le système consommateur, selon un deuxième mode de réalisation ;

la figure 5 illustre un exemple d'évolutions de profils de consommation $\%\Delta t_{s|D(ic)}(D)$ issus de signaux de mesure acquis par le dispositif de mesure.

## EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

La figure 1 est une vue schématique et partielle d'un système consommateur 1 selon un mode de réalisation.

Le système consommateur 1 est une structure qui consomme un fluide d'intérêt par le biais d'au moins un dispositif consommateur 2 (et de préférence plusieurs dispositifs consommateurs 2), et dont il s'agit de surveiller la consommation pour détecter d'éventuelles anomalies. Par consommation, on entend que le système consommateur 1 reçoit le fluide d'intérêt à partir d'une source 3, et l'utilise (le « consomme ») selon différentes utilisations, qui peuvent être d'ordre personnel et/ou professionnel. Un tel système consommateur 1 peut être, par exemple, une maison, un appartement, un immeuble comportant plusieurs appartements, une école, une usine, un hôpital, un camping, ou autre, et d'une manière générale, est tout type de structure ou ensemble à usage personnel et/ou professionnel, comportant au moins un dispositif 2 consommateur du fluide d'intérêt, et de préférence une pluralité de dispositifs consommateurs 2.

Le fluide d'intérêt peut être un liquide ou un gaz, tel que de l'eau, de l'hydrogène, de l'oxygène, de l'azote, de l'hélium, etc... Ainsi, le système consommateur 1 peut être une usine qui consomme par exemple de l'hydrogène, de l'oxygène ou de l'azote, en phase liquide ou gazeuse. Il peut également être un bâtiment de formation (école) qui utilise de l'eau liquide. Dans la suite de la description, le système consommateur 1 est une maison d'habitation, et le fluide d'intérêt est de l'eau liquide.

Le système consommateur 1 comporte au moins un dispositif consommateur 2 qui assure la consommation effective du fluide d'intérêt, et de préférence une pluralité de dispositifs consommateurs 2. Dans le cadre de notre exemple d'une maison d'habitation, les dispositifs consommateurs 2 peuvent être les robinets de toilettes, d'une cuisine, d'une salle de bain, ainsi que les éléments d'électroménager tels qu'un lave-vaisselle et un lave-linge. Il peut également s'agir des toilettes à chasse d'eau. Le système consommateur 1 peut également comporter des dispositifs consommateurs dont la consommation n'est pas surveillée par le dispositif de mesure 4 et l'unité de traitement 5.

Le système consommateur 1 comporte également un circuit fluidique qui assure la distribution du fluide d'intérêt à partir de la source 3 jusqu'au(x) dispositif(s) consommateur(s) 2. Il s'agit de conduits de distribution, éventuellement munis de vannes. La source 3 du fluide d'intérêt peut être un réseau d'approvisionnement, par exemple de la ville, un réservoir, ou autre.

Le système consommateur 1 comporte un dispositif de mesure 4, raccordé au circuit fluidique et situé entre la source 3 et le ou les dispositifs consommateurs 2. Il peut s'agir par exemple d'un compteur d'eau à débitmètre, d'un compteur d'eau à impulsions, ou autre. Il est adapté à mesurer et fournir à une unité de traitement 5 un signal de mesure $(Sm(t_{(m)}))_{1\leq m\leq M}$ représentatif d'un débit moyen $D(t_{(m)})$ et d'une durée d'écoulement $\Delta t_{e|D}(t_{(m)})$ associée au débit moyen D, sur une durée prédéfinie $\Delta t_s$ dite durée de surveillance. Il peut transmettre ce signal de mesure Sm en temps réel, à intervalle régulier ou au terme de la durée de surveillance $\Delta t_s$. On note ici $t_{(m)}$ l'instant de mesure auquel le débit moyen $D(t_{(m)})$ et la durée d'écoulement $\Delta t_{e|D}(t_{(m)})$ sont associés. Il peut s'agir d'un instant temporel au cours de la durée de surveillance $\Delta t_s$, ou d'un simple incrément correspondant à un évènement de mesure. Ainsi, le signal de mesure $(Sm(t_{(m)}))_{1\leq m\leq M}$ comporte M instants de mesure, où l'incrément m va de 1 à M. Le débit mesuré $D(t_{(m)})$ est dit moyen dans le sens où il s'agit de la moyenne du débit effectif au cours de la durée d'écoulement associée $\Delta t_{e|D}(t_{(m)})$, à l'instant de mesure $t_{(m)}$.

La durée de surveillance $\Delta t_s$ est caractéristique de l'échelle de temps associée à un profil de consommation du système consommateur 1. Il peut s'agir d'une à plusieurs heures, une ou plusieurs journées, voire semaines ou mois. Dans le cadre de notre exemple d'une maison d'habitation, la durée de surveillance $\Delta t_s$ correspond à une journée.

A titre d'exemple, dans le cas où le dispositif de mesure 4 est un compteur d'eau à débitmètre à turbine, le signal de mesure $(Sm(t_{(m)}))_{1\leq m\leq M}$ est une matrice formée par exemple de l'instant de la mesure $t_{(m)}$, du débit moyen $D(t_{(m)})$ mesuré ou, de manière équivalente, du volume du fluide d'intérêt s'étant écoulé, et de la durée d'écoulement $\Delta t(t_{(m)})$ correspondante. La turbine peut être le débitmètre, ou être une source d'alimentation électrique pour la transmission du signal de mesure.

En variante, le dispositif de mesure 4 peut être un compteur d'eau à impulsions. Dans cet exemple, le signal de mesure $(Sm(t_{(m)}))_{1\leq m\leq M}$ peut être une matrice comportant l'instant ou l'évènement où une impulsion est émise. Cette impulsion est émise lorsqu'un volume prédéfini du fluide d'intérêt s'est écoulé (par ex. 1 impulsion par litre). L'unité de traitement 5 peut alors en déduire les valeurs du débit moyen $D(t_{(m)})$, ainsi que celles de la durée d'écoulement $\Delta t(t_{(m)})$ associé à chaque valeur du débit moyen.

Le dispositif de mesure 4 peut transmettre le signal de mesure Sm au terme de la durée de surveillance $\Delta t_s$, voire peut transmettre le signal de mesure Sm pendant la durée de surveillance $\Delta t_s$, le signal de mesure étant alors en cours d'acquisition.

Le système consommateur 1 comporte également une unité de traitement 5, connectée au dispositif de mesure 4. Elle comporte au moins un calculateur et au moins une mémoire. Elle permet la mise en œuvre des opérations de traitement du procédé de détection d'une anomalie décrit plus loin. Le calculateur comporte un processeur programmable apte à exécuter des instructions enregistrées sur un support d'enregistrement d'informations. La mémoire contient des instructions pour la mise en œuvre du procédé de détection. Elle est également adaptée à stocker les informations reçues par le dispositif de mesure 4, et comporte ici une base de données DB de profils de consommation du système consommateur 1 identifiés comme étant sans anomalie de consommation. Elle peut être intégrée en tout ou partie dans le dispositif de mesure 4 ou être à distance de celui-ci, et la transmission d'informations du dispositif de mesure vers l'unité de traitement 5 peut être de type filaire ou non filaire.

L'unité de traitement 5 est en particulier adaptée à déterminer un profil de consommation à partir du signal de mesure Sm reçu par le dispositif de mesure 4. Le profil de consommation correspond à une variation en fonction du débit moyen D d'un indicateur d'écoulement représentatif d'une proportion $\%\Delta t_{s|D}$ d'une durée d'écoulement cumulée $\Delta t_{ec|D}$ du fluide d'intérêt au cours de la durée de surveillance $\Delta t_s$. Autrement dit, à chaque valeur du débit moyen D mesuré par le dispositif de mesure 4, on détermine la durée d'écoulement cumulée $\Delta t_{ec|D}$ correspondante, qui est la somme des durées d'écoulement $\Delta t_{e|D}$ mesurées et associées à la même valeur du débit moyen D (ou à la même classe de valeurs dans le cas d'un histogramme). L'indicateur d'écoulement est ainsi représentatif de la proportion de la durée d'écoulement cumulée $\Delta t_{ec|D}$ au cours de la durée de surveillance $\Delta t_s$, pour chaque valeur (ou classe) du débit moyen. Par la suite, on parle d'une valeur du débit moyen, mais cela couvre également une classe de valeurs du débit moyen.

Comme présenté en détail plus loin, le procédé de détection comporte une phase de préparation, suivie d'une phase de surveillance et de détection. Au cours de la phase de préparation, une base de données est constituée, qui est formée de profils de consommation du système consommateur 1 identifiés comme étant sans anomalie de consommation. Cette base de données permet de déterminer par la suite un seuil d'anomalie Sa, et est destiné à être mis à jour régulièrement pour que le seuil d'anomalie s'adapte à l'évolution de la consommation du système consommateur 1 au fil des durées de surveillance. Ensuite, au cours de la phase de surveillance et d'analyse, un nouveau profil de consommation, dit courant, est déterminé à partir d'un signal de mesure, puis est comparé au seuil d'anomalie Sa préalablement déterminé à partir de la base de données DB, pour déterminer si le profil de consommation présente ou non une anomalie de consommation. Dans le cas où il est sans anomalie, le profil de consommation courant est ajouté à la base de données et le seuil d'anomalie Sa est ensuite mis à jour.

La figure 2 est un organigramme d'un procédé de détection d'anomalies selon un premier mode de réalisation. Dans la suite de la description, le système consommateur 1 est une maison familiale et le fluide d'intérêt est de l'eau liquide.

Comme indiqué précédemment, un profil de consommation correspond à une variation, en fonction du débit moyen D mesuré par le dispositif de mesure 4, d'un indicateur d'écoulement représentatif d'une proportion $\%\Delta t_{s|D}$ d'une durée d'écoulement d'eau cumulée $\Delta t_{ec|D}$ par rapport à la durée de surveillance $\Delta t_s$. Il est déterminé par l'unité de traitement 5 à partir du signal de mesure Sm acquis par le dispositif de mesure 4 au cours de la durée de surveillance $\Delta t_s$, ici au cours d'une journée.

Dans ce premier mode de réalisation, le profil de consommation est déterminé à partir de la fonction de répartition $F_D(d)$ (également appelée fonction de distribution cumulative, ou *Cumulative Distribution Function,* en anglais). Il peut ainsi s'agir, soit de la fonction de répartition $F_D(d)$ elle-même, soit de la fonction complémentaire $\%\Delta t_{s|D}(d) = 1\text{-}F_D(d)$. Par la suite, le profil de consommation est la fonction $\%\Delta t_{s|D}(d)$.

Notons ici que la fonction de répartition $F_D(d)$ correspond à la probabilité d'obtenir une valeur du débit moyen inférieure ou égale à d : $F_D(d) = P(D \leq d)$. Cette probabilité $P(D \leq d)$ est égale à la proportion $\%\Delta t_{s|D}$ de la durée d'écoulement cumulée $\Delta t_{ec|D}$ au cours de la durée de surveillance $\Delta t_s$ (ici la journée) pour laquelle le débit moyen D est nul ou au plus égal à d. La fonction de répartition $F_D(d)$ est comprise entre 0% et 100%, et le débit moyen D varie entre zéro et le débit maximal mesuré par le signal de mesure Sm.

Ainsi, à titre d'exemple, une valeur $F_D(D_s)$ de 80% pour un débit moyen seuil $D_s$ de 0.1L/min correspond à une proportion de 80% de la durée de surveillance $\Delta t_s$ pour laquelle le débit moyen est nul (pas d'écoulement) ou au plus égal à 0.1L/min. On en déduit alors que la fonction $\%\Delta t_{s|D}(D_s)$ présente une valeur égale à 20%, qui correspond à la proportion de la durée de surveillance $\Delta t_s$ pour laquelle le débit moyen est supérieur strictement à 0.1L/min (écoulement).

<u>Phase de préparation 110 : Fournir la base de données DB</u>

La phase de préparation 110 consiste donc à former une base de données DB de profils de consommation identifiés comme étant sans anomalie de consommation. Elle comporte l'étape 111 d'acquisition d'un signal de mesure, l'étape 112 de détermination du profil de consommation correspondant et de constitution de la base de données BD, puis l'étape 113 de vérification que la base de données BD comporte le nombre minimal $N_{min}$ de profils de consommation.

La base de données est formée d'une pluralité N de profils de consommation $\{ \%\Delta t_{s|D(n)}(d) \}_{1 \leq n \leq N}$ du système consommateur 1, où $\%\Delta t_{s|D(n)}(d) = 1\text{-}F_D(d)$, et où N est au moins égal à une valeur minimale $N_{min}>1$. $N_{min}$ peut être égal à au moins 5, 10 ou 20. A titre d'exemple, $N_{min}$ peut être égal à 7, de sorte que la base de données comporte des profils de consommation $\%\Delta t_{s|D(n)}(d)$ associés à des durées de surveillance $\Delta t_{s(n)}$ successives couvrant ainsi au moins une semaine. Les profils de consommation de la base de données sont identifiés comme étant sans anomalie de consommation (et avec consommation du fluide d'intérêt), et permettront donc de déterminer ultérieurement un seuil d'anomalie Sa.

La constitution de la base de données de profils de consommation peut être effectuée de différentes manières. La base de données peut ainsi être obtenue par simulation numérique à partir d'un modèle physique du système consommateur 1. Elle peut également être obtenue, comme décrit en détail ci-après, au cours d'une surveillance du système consommateur 1 par le dispositif de mesure 4 et l'unité de traitement 5.

Lors d'une étape 111, le dispositif de mesure 4 acquiert le signal de mesure $Sm_{(1)}$ au cours d'une première durée de surveillance $\Delta t_{s(1)}$ (ic=1). Le signal de mesure $Sm_{(1)} = (Sm_{(1)}(t_{(m)}))_{1\leq m\leq M}$ est donc formé de M instants de mesure $t_{(1,m)}$ successifs, où l'incrément m va de 1 à M, de M valeurs de débit moyen $D_{(1)}(t_{(m)})$, et de M valeurs de la durée d'écoulement $\Delta t_{e|D(1)}(t_{(m)})$ associé au débit moyen $D_{(1)}(t_{(m)})$ mesuré.

Lors d'une étape 112, l'unité de traitement 5 détermine ensuite le profil de consommation $\%\Delta t_{s|D(1)}(d)$ à partir du signal de mesure $Sm_{(1)}$. Pour cela, elle détermine la durée d'écoulement cumulée $\Delta t_{ec|D(1)}$ associée aux valeurs du débit moyen $D_{(1)}$ mesuré, en sommant les durées d'écoulement $\Delta t_{e|D(1)}$ ayant une même valeur de débit moyen $D_{(1)}$ mesuré. Puis, elle détermine la fonction de répartition $F_{D(1)}(d)$ associée, et en déduit le profil de consommation $\%\Delta t_{s|D(1)}(d) = 1-F_{D(1)}(d)$. Le profil de consommation $\%\Delta t_{s|D(1)}(d)$ indique ainsi la proportion en temps de la durée de surveillance $\Delta t_{s(1)}$ pour laquelle le débit moyen $D_{(1)}$ mesuré est supérieur à la valeur d.

Le profil de consommation $\%\Delta t_{s|D(1)}(d)$ est identifié comme étant sans anomalie de consommation, et est donc intégré dans la base de données BD. Plus précisément, le profil peut être identifié par l'utilisateur comme étant sans anomalie. En variante, comme décrit plus loin en référence à l'étape 141, l'unité de traitement 5 peut comparer la valeur du profil de consommation $\%\Delta t_{s|D(1)}(D_s)$ pour un débit moyen de référence $D_s$, par exemple égal à 0.1L/min, à un seuil d'anomalie prédéfini, par exemple égal à 20%.

Les étapes 111 et 112 sont réitérées pour des durées de surveillance $\Delta t_{s(n)}$ successives, jusqu'à ce que, comme le montre l'étape 113, le nombre N de profils de consommation $(\%\Delta t_{s|D(n)}(d))_{1\leq n\leq N}$ est au moins égal à la valeur minimale prédéfinie $N_{min}$. On obtient ainsi une base de données BD comportant au moins $N_{min}$ profils de consommation $\%\Delta t_{s|D(n)}(d)$ identifiés comme étant sans anomalie de consommation, et donc à partir desquels un seuil d'anomalie Sa peut ensuite être défini.

Phase de surveillance et détection 120

La phase de surveillance et de détection 120 comporte une étape 121 de détermination du seuil d'anomalie Sa, les étapes 131, 132 de mesure et de détermination d'un profil de consommation dit courant $\%\Delta t_{s|D(ic)}(d)$, puis les étapes 141, 142, 143 d'analyse du profil courant et de détection de la présence ou non d'une anomalie de détection. La phase de surveillance 120 est effectuée pour une durée de surveillance $\Delta t_{s(ic)}$ dite courante, et est réitérée lorsqu'on passe à la durée de surveillance $\Delta t_{s(ic+1)}$ suivante, l'indicateur ic étant alors incrémenté d'une unité.

Lors d'une étape 121, l'unité de traitement 5 détermine le seuil d'anomalie $Sa_{(ic)}(D_s)$, associé à au moins une valeur de référence $D_s$ du débit moyen D, à partir des profils de consommation $(\%\Delta t_{s|D(n)}(d))_{1\leq n\leq N}$ de la base de données. Dans ce premier mode de réalisation, le seuil d'anomalie est un scalaire associé à une seule valeur de référence prédéfinie $D_s$ du débit moyen, ici par exemple égale à 0.1L/min.

La valeur de référence $D_s$ du débit moyen D dépend des usages de consommation d'eau par le système consommateur 1, et donc du type de dispositifs consommateurs 2 présents. La valeur de 0.1L/min est une valeur non nulle suffisamment faible pour correspondre au débit d'un robinet mal fermé ou d'une fuite dans une douche ou des toilettes. Dans le cadre d'une maison d'habitation, la proportion de durée d'écoulement sur une journée pour laquelle le débit moyen est supérieur à 0.1L/min est habituellement de l'ordre de 20% voire moins. Aussi, on comprend que si un profil de consommation courant $\%\Delta t_{s|D(ic)}(d)$ montre une proportion de durée d'écoulement associé au débit $D_s$ de 0.1L/min qui est supérieur au seuil d'anomalie fixé par exemple à 40%, on peut en déduire que la consommation d'eau a augmenté, et donc qu'il y a une anomalie de consommation, comme par exemple une fuite intermittente ou continue.

Le seuil d'anomalie $Sa_{(ic)}(D_s)$ est défini à partir des valeurs $(\%\Delta t_{s|D(n)}(D_s))_{1\leq n\leq N}$ pour la valeur de référence $D_s$ du débit moyen D. Il est ici égal à une moyenne $<\%\Delta t_{s|D(n)}(D_s)>_{1\leq n\leq N}$ des valeurs $(\%\Delta t_{s|D(n)}(D_s))_{1\leq n\leq N}$ des profils de consommation à la valeur de référence $D_s$, à laquelle on a ajouté un coefficient prédéfini. Le coefficient peut être égal à au moins une fois l'écart-type $\sigma_{\%\Delta ts(n)}(D_s)$ associé aux valeurs $(\%\Delta t_{s|D(n)}(D_s))_{1\leq n\leq N}$, et est ici égal à trois fois l'écart-type. Il peut également comporter un terme dit de tolérance tt, par exemple égal à 5%.

Autrement dit, le seuil d'anomalie $Sa(D_s)$ est défini dans cet exemple par la relation suivante :

$$Sa_{(ic)}(D_s) = \langle \%\Delta t_{s|D(n)}(D_s) \rangle_{1\leq n\leq N} + \left(3 \times \sigma_{\%\Delta ts(n)}(D_s) + tt\right)$$

D'autres définitions du seuil d'anomalie sont évidemment possibles, par exemple où l'on utilise une médiane et non une moyenne. D'une manière générale, le seuil d'anomalie peut être calculé à partir d'un indicateur de tendance centrale (moyenne, médiane... - *central tendency,* en anglais) auquel est ajouté ou multiplié un coefficient. La moyenne peut être une moyenne arithmétique, une moyenne pondérée, ou équivalent. Le terme d'écart-type et/ou le terme de tolérance peuvent être présents ou non. On peut également utiliser, entre autres, un terme correspondant à un percentile prédéfini associé aux profils de consommation $(\%\Delta t_{s|D(n)}(D_s))_{1\leq n\leq N}$, par exemple à la place du terme d'écart-type.

Ensuite, lors des étapes 131 et 132, on acquiert le signal de mesure courant $Sm_{(ic)}$ lors de la durée de surveillance courant $\Delta t_{s(ic)}$, puis on détermine le profil de consommation courant $\%\Delta t_{s|D(ic)}(d)$.

Lors de l'étape 131, au cours de la durée de surveillance courante $\Delta t_{s(ic)}$, le dispositif de mesure 4 acquiert le signal de mesure courant $Sm_{(ic)}$, lequel est donc formé de M valeurs d'instants de mesure successifs $t_{(ic,m)}$, du débit moyen mesuré $D_{(ic)}(t_{(m)})$, et de la durée d'écoulement $\Delta t_{e|D(ic)}(t_{(m)})$ associé au débit moyen mesuré.

Lors de l'étape 132, l'unité de traitement 5 détermine ensuite le profil de consommation courant $\%\Delta t_{s|D(ic)}(d)$ à partir du signal de mesure courant $Sm_{(ic)}$. Comme indiqué précédemment en référence à l'étape 112, l'unité de traitement 5 détermine la durée d'écoulement cumulée $\Delta t_{ec|D(ic)}$ associée aux valeurs du débit moyen $D_{(ic)}$ mesuré, en sommant les durées d'écoulement $\Delta t_{e|D(ic)}$ ayant une même valeur de débit moyen $D_{(ic)}$ mesuré. Puis, elle détermine la fonction de répartition $F_{D(ic)}(d)$ associée, et en déduit le profil de consommation courant $\%\Delta t_{s|D(ic)}(d) = 1\text{-}F_{D(ic)}(d)$.

Ensuite, lors des étapes 141, 142 et 143, on compare le profil de consommation courant $\%\Delta t_{s|D(ic)}(d)$ au seuil d'anomalie $Sa_{(ic)}(D_s)$, et on en déduit si une anomalie est présente ou non, pour ensuite éventuellement mettre à jour la base de données BD.

Lors de l'étape 141, on compare la valeur du profil de consommation $\%\Delta t_{s|D(ic)}(D_s)$ à la valeur de référence $D_s$ du débit moyen vis-à-vis du seuil d'anomalie $Sa_{(ic)}(D_s)$. La valeur de référence $D_s$ est ici égale à 0.1L/min.

Si la valeur $\%\Delta t_{s|D(ic)}(D_s)$ est au moins au-delà du seuil d'anomalie $Sa_{(ic)}(D_s)$, c'est-à-dire ici supérieure ou égale au seuil d'anomalie, alors le profil de consommation courant montre une consommation d'eau anormale, et une anomalie de consommation est alors détectée. Le procédé poursuit à l'étape 142. Notons que dans le cas où le profil de consommation courant est défini comme étant $\%\Delta t_{s|D(ic)}(d) = F_{D(ic)}(d)$, la valeur $\%\Delta t_{s|D(ic)}(D_s)$ est dite au moins au-delà du seuil d'anomalie $Sa_{(ic)}(D_s)$ lorsqu'elle est inférieure ou égale au seuil d'anomalie.

Si la valeur $\%\Delta t_{s|D(ic)}(D_s)$ est en-deçà du seuil d'anomalie $Sa_{(ic)}(D_s)$, c'est-à-dire ici inférieure au seuil d'anomalie, alors le profil de consommation courant ne présente pas une consommation d'eau excessive, et le profil est identifié comme étant sans anomalie de consommation. Le procédé poursuit à l'étape 143. Par ailleurs, dans le cas où le profil de consommation courant est défini comme étant $\%\Delta t_{s|D(ic)}(d) = F_{D(ic)}(d)$, la valeur $\%\Delta t_{s|D(ic)}(D_s)$ est dite au-deçà du seuil d'anomalie $Sa_{(ic)}(D_s)$ lorsqu'elle est supérieure au seuil d'anomalie.

Lors de l'étape 142 (présence d'une anomalie de consommation), l'utilisateur est alerté par l'unité de traitement 5 de la présence d'une anomalie de consommation au cours de la durée de surveillance courante $\Delta t_{s(ic)}$. L'utilisateur peut alors marquer le profil de consommation courant comme présentant une anomalie, de sorte qu'il n'est alors pas intégré dans la base de données BD. La surveillance continue ensuite jusqu'à la fin de la durée de surveillance courante $\Delta t_{s(ic)}$, puis la phase de surveillance 120 reprend à l'étape 131 d'acquisition du signal de mesure $Sm_{(ic+1)}$, pour une nouvelle durée de surveillance $\Delta t_{s(ic+1)}$.

Un indicateur « d'intensité » de l'anomalie peut être calculé et indiqué à l'utilisateur. Celle-ci peut ainsi être définie comme un écart de la valeur $\%\Delta t_{s|D(ic)}(D_s)$ vis-à-vis du seuil d'anomalie $Sa(D_s)$. Ainsi, plus cet écart est important en valeur absolue, plus la durée d'écoulement associée à l'anomalie de consommation est élevée. Cet écart est maximal lorsque la valeur $\%\Delta t_{s|D(ic)}(D_s)$ est égale à 100%, traduisant ainsi le fait que l'anomalie de consommation est présente sur toute la durée de surveillance courante $\Delta t_{s(ic)}$, et peut être ainsi une fuite continue.

Lors de l'étape 143 (absence d'une anomalie), le profil de consommation courant $\%\Delta t_{s|D(ic)}(d)$ est ajouté à la base de données BD. Puis le phase de surveillance 120 reprend à l'étape 121 de détermination du seuil d'anomalie $Sa_{(ic+1)}(D_s)$, pour une nouvelle durée de surveillance $\Delta t_{s(ic+1)}$.

Ainsi, le procédé de détection permet d'identifier de manière simple et efficace la présence ou non d'une anomalie dans le profil de consommation courant, tout en étant en mesure de s'adapter à l'évolution de la consommation du système consommateur 1 au fil des durées de surveillance. Cela est atteint par la mise à jour régulière de la valeur du seuil d'anomalie au moyen de l'intégration dans la base de données des profils de consommation courant, lorsque ceux-ci sont identifiés comme étant sans anomalie. Ainsi, le seuil d'anomalie s'adapte en fonction de la consommation effective du système consommateur 1, et permet de fournir une détection plus pertinente et effective des anomalies. Le seuil d'anomalie n'est donc pas défini de manière a *priori,* i.e. sans tenir compte du type de système consommateur 1 et de l'évolution de sa consommation. Au contraire, par l'utilisation d'une base de données de profils de consommation régulièrement mise à jour par l'intégration des profils de consommation courants sans anomalie d'une part (ces profils étant spécifique au système consommateur 1 surveillé), et par le calcul du seuil d'anomalie à partir de la base de données, la détection d'anomalie est de meilleure qualité.

La figure 3A illustre un exemple de profils de consommation $\%\Delta t_{s|D(ic)}(d)$ issus de signaux de mesure acquis par un compteur d'eau à débitmètre, où la durée de surveillance $\Delta t_{s(ic)}$ correspond à une journée. On remarque que l'essentiel des courbes (référencée par « A ») présente une valeur $\%\Delta t_{s|D}(d=0)$ au plus égale à 5% environ pour un débit moyen nul. Cela traduit le fait que sur 5% d'une journée, le débit moyen est non nul (écoulement présent). Autrement dit, le système consommateur 1 consomme de l'eau seulement au cours de 5% de la journée. En revanche, il apparaît que pour l'une des courbes (référencée par « B »), la valeur $\%\Delta t_{s|D}(d=0)$ est égale à 35% environ, donc bien supérieure aux 5%. Cela traduit le fait que, sur 35% de la journée, le débit moyen est non nul, et ici supérieur à 4L/min environ. Autrement dit, sur 35% de la journée, le système consommateur 1 consomme de l'eau avec un débit moyen supérieur à 4L/min. Une telle courbe peut ainsi être représentative d'une fuite intermittente.

La figure 3B illustre trois types de profils de consommation $\%\Delta t_{s|D(ic)}(d)$ issus de signaux de mesure acquis par un compteur d'eau à impulsions, où la durée de surveillance $\Delta t_{s(ic)}$ correspond également à une journée. On remarque tout d'abord que toutes les courbes commencent à 100%, autrement dit toutes les valeurs $\%\Delta t_{s|D}(d=0)$ sont égales à 100%. Cela provient du fait qu'un compteur d'eau à impulsions ne permet pas de connaître l'écoulement effectif entre deux impulsions successives. Ainsi, bien qu'entre deux impulsions, il puisse y avoir une phase sans écoulement, le débit moyen sera toujours non nul entre deux impulsions. Les profils de consommation présentent donc une probabilité de 100% d'avoir un débit moyen non nul.

Un premier ensemble (référencé « A ») de profils de consommation présente une valeur $\%\Delta t_{s|D}(d)$ qui diminue fortement de 100% à 5% environ entre 0 et 0.1L/min environ, puis qui reste sensiblement constante à partir de 0.1L/min ou qui diminue lentement vers zéro. Ce type de profils de consommation est représentatif d'une absence d'anomalie de consommation. Le seuil d'anomalie peut ainsi être fixé à 25-30% pour une valeur de référence $D_s$ égale à 0.1L/min.

Un deuxième ensemble (référencé « B ») de profils de consommation présente une valeur $\%\Delta t_{s|D}(d)$ qui diminue fortement de 100% à 70% environ entre 0 et 0.1L/min environ, puis qui diminue progressivement de 70% à 5% environ entre 0.1L/min et 0.3L/min environ, puis qui reste sensiblement constante à partir de 0.3L/min ou qui diminue lentement vers zéro. Ce type de profils de consommation est représentatif de la présence d'une anomalie de consommation telle qu'une fuite intermittente.

Enfin, un troisième ensemble (référencé « C ») de profils de consommation présente une valeur $\%\Delta t_{s|D}(d)$ qui reste sensiblement égale à 100% jusqu'à 0.4L/min environ, puis qui diminue fortement de 100% à 10% environ entre 0.4L/min et 0.6L/min environ, puis qui reste sensiblement constante à partir de 0.6L/min. Le fait que la valeur $\%\Delta t_{s|D}(d)$ reste égale à 100% jusqu'à 0.4L/min environ est représentatif de la présence d'une anomalie de consommation telle qu'une fuite continue à au moins 0.4L/min. En effet, cette valeur indique que la probabilité est de 100% au cours de la durée de surveillance d'avoir un débit moyen supérieur à 0.4L/min.

Les fig.3A et 3B montrent ainsi qu'il est possible de déterminer une valeur de référence $D_s$ du débit moyen D permettant de discriminer les profils de consommation avec et sans anomalie de consommation, que le dispositif de mesure 4 comporte un compteur d'eau à débitmètre ou un compteur d'eau à impulsions.

La figure 3C illustre un autre exemple de profils de consommation $\%\Delta t_{s|D(ic)}(d)$ issus de signaux de mesure acquis par un compteur d'eau à impulsions, où la durée de surveillance $\Delta t_{s(ic)}$ correspond à une journée. On montre ici des profils de consommation $\%\Delta t_{s|D(n)}(d)$ appartenant à la base de données BD, ainsi que trois exemples de profils de consommation courants qui présentent des anomalies de consommation.

Les profils de consommation $(\%\Delta t_{s|D(n)}(d))_{1\leq n\leq N}$ de la base de données DB forment des profils de référence à partir desquels il est possible de déterminer le seuil d'anomalie. Dans l'exemple donné précédemment, le seuil d'anomalie $Sa(D_s)$ correspond à la moyenne des valeurs $(\%\Delta t_{s|D(n)}(D_s))_{1\leq n\leq N}$ où la valeur de référence $D_s$ du débit moyen est égal à 0.1L/min, à laquelle on a soustrait un coefficient correspondant à trois fois l'écart-type associé à ces valeurs et à 5% de tolérance. Il est ici égal à 20-25% environ.

Trois profils de consommations courants sont illustrés. Le premier profil présente une valeur $\%\Delta t_{s|D}(D_s)$ de 30% environ, de sorte que la proportion d'écoulement $\%\Delta t_s$ au cours de la durée de surveillance $\Delta t_s$ avec un débit moyen supérieur à 0.1L/min est de 30% et ici sensiblement égale au seuil d'anomalie $Sa(D_s)$. Le deuxième profil présente une valeur $\%\Delta t_{s|D}(D_s)$ de 60% environ, de sorte que la proportion d'écoulement $\%\Delta t_s$ avec un débit moyen supérieur à 0.1L/min est de 60% et ici encore plus supérieure au seuil d'anomalie $Sa(D_s)$. Ces deux exemples sont représentatifs d'une fuite intermittente. Enfin, le troisième profil présente une valeur $\%\Delta t_{s|D}(D_s)$ de 100%, de sorte que l'écoulement $\%\Delta t_s$ au cours de la durée de surveillance $\Delta t_s$ avec un débit moyen supérieur à 0.1L/min est continu (fuite continue notamment dans le cas d'un compteur à débitmètre).

Le procédé de détection peut présenter différentes variantes avantageuses. Ainsi, la base de données BD peut comporter un nombre maximal $N_{max}$ de profils de consommation, par exemple $N_{max}$ égal à 30 pour que la base de données couvre un mois de consommation. Il est avantageux que le nombre maximal $N_{max}$ de profils de consommation correspondent à un nombre glissant. Ainsi, lorsque la base de données comporte $N_{max}$ profils, l'intégration du profil courant se traduit par la suppression du profil le plus ancien. Ainsi, le seuil d'anomalie, qui est mis à jour à chaque identification d'un profil courant sans anomalie, sera peu sensible à un changement brusque que présenterait un profil courant sans anomalie, mais resterait toutefois sensible aux changements progressifs des profils de consommation.

Par ailleurs, le seuil d'anomalie $Sa_{(ic)}(D_s)$ peut varier dans une gamme prédéfinie, délimitée par une valeur minimale et une valeur maximale. La valeur minimale peut être nulle mais pourrait ne pas l'être. En revanche, la valeur maximale permet d'éviter qu'un écart-type trop important n'engendre un seuil d'anomalie trop élevé qui ne permettrait alors plus de détecter les anomalies de consommation réelles. Cette valeur maximale dépend notamment du type de système consommateur 1. Elle peut être définie à 30% pour une maison d'habitation.

Comme indiqué précédemment, lors de la phase de préparation 10, les profils de consommation peuvent être comparés à un seuil d'anomalie initial prédéfini par l'utilisateur, en attendant que le nombre N de profils de la base de données atteigne la valeur $N_{min}$. La valeur initiale du seuil d'anomalie peut, par exemple, être fixée à 20%.

Par ailleurs, l'étape 141 peut être effectuée régulièrement au cours d'une même durée de surveillance $\Delta t_{s(ic)}$, au fur et à mesure que les valeurs du signal de mesure $Sm_{(ic)}$ sont transmises à l'unité de traitement 5. Cela permet de détecter une anomalie de consommation au plus tôt, sans attendre que la durée de surveillance $\Delta t_{s(ic)}$ soit terminée.

Notons enfin que le procédé de détection selon ce premier mode de réalisation peut avantageusement tirer parti de la sensibilité élevée de certains types de dispositifs de mesure vis-à-vis de débits moyens faibles, tels que les compteurs à impulsions.

La figure 4 est un organigramme d'un procédé de détection d'anomalies selon un deuxième mode de réalisation. Le système consommateur 1 est également ici une maison familiale et le fluide d'intérêt est de l'eau liquide.

Dans ce deuxième mode de réalisation, le profil de consommation est la variation $\%\Delta t_s(D)$, en fonction du débit moyen, de la proportion $\%\Delta t_s$ de durée d'écoulement cumulée $\Delta t_{ec|D}$ sur la durée de surveillance $\Delta t_s$. Cette variation est notée ici $\%\Delta t_s(D)$ car elle est fonction du débit moyen D, et se distingue de la fonction $\%\Delta t_s(d)$ du premier mode de réalisation qui était une probabilité associée à un débit moyen D supérieur à d.

Le profil de consommation $\%\Delta t_s(D)$ peut présenter des pics en fonction du débit moyen, ces pics étant caractéristiques des débits moyens habituels correspondant aux différents dispositifs consommateurs 2. En effet, une douche présente un débit moyen qui n'est pas celui d'une machine à laver ni celui d'une chasse d'eau de toilettes.

Le profil de consommation $\%\Delta t_s(D)$ est donc un profil de la durée d'écoulement cumulée, ou ici de sa proportion au cours de la durée de surveillance, en fonction du débit moyen. Il s'agit de la distribution en débit de la durée d'écoulement (ou de la proportion en temps de l'écoulement au cours de la durée de surveillance). Notons que cette distribution est la dérivée de la fonction de répartition $F_D(d)$.

Le procédé de détection comporte également une phase initiale de préparation 10, suivie d'une phase de surveillance et de détection 20. Plusieurs étapes sont identiques ou similaires à celles du procédé selon le premier mode de réalisation, et ne seront donc pas détaillées à nouveau.

Phase de préparation 210 : Fournir la base de données DB

La phase de préparation 210 consiste à former une base de données DB de profils de consommation identifiés comme étant sans anomalie de consommation.

Lors d'une étape 211, le dispositif de mesure 4 acquiert un premier signal de mesure $Sm_{(1)}$ au cours de la durée de surveillance $\Delta t_{s(1)}$, où l'indicateur ic est égal à 1. Le signal de mesure $Sm_{(1)}$ est identique à celui de l'étape 111.

Lors d'une étape 212, l'unité de traitement 5 détermine ensuite le profil de consommation $\%\Delta t_{s|D(1)}(D)$ à partir du signal de mesure $Sm_{(1)}$. Pour cela, elle détermine la durée d'écoulement cumulée $\Delta t_{ec|D(1)}$ associée aux valeurs du débit moyen $D_{(1)}$ mesuré, en sommant les durées d'écoulement $\Delta t_{e|D(1)}$ ayant une même valeur de débit moyen $D_{(1)}$ mesuré. Puis, elle détermine la proportion $\%\Delta t_{s|D(1)}(D) = \Delta t_{ec|D(1)}(D) / \Delta t_s$ comme étant ici le rapport entre la durée d'écoulement cumulée $\Delta t_{ec|D(1)}$ sur la durée de surveillance $\Delta t_s$, pour chaque valeur du débit moyen. La variation $\%\Delta t_{s|D(1)}(D)$ de la proportion de la durée d'écoulement cumulée en fonction du débit moyen D forme donc le profil de consommation.

Le profil de consommation est identifié comme étant sans anomalie, de la même manière que décrit dans le procédé selon le premier mode de réalisation. Il est intégré dans la base de données. Les étapes 211 et 212 sont réitérées pour des durées de surveillance $\Delta t_{s(n)}$ successives, jusqu'à ce que, comme le montre l'étape 213, le nombre N de profils de consommation $(\%\Delta t_{s|D(n)}(D))_{1\leq n\leq N}$ est au moins égal à la valeur minimale prédéfinie $N_{min}$. On obtient ainsi une base de données BD comportant au moins $N_{min}$ profils de consommation $\%\Delta t_{s|D(n)}(D)$ identifiés comme étant sans anomalie de consommation (et avec consommation du fluide d'intérêt), et donc à partir desquels un seuil d'anomalie Sa peut ensuite être défini.

Phase de surveillance et détection 220

Comme précédemment, la phase de surveillance 220 est effectuée pour une durée de surveillance $\Delta t_{s(ic)}$ dite courante, et est réitérée lorsqu'on passe à la durée de surveillance $\Delta t_{s(ic+1)}$ suivante, l'indicateur ic étant alors incrémenté d'une unité.

Lors d'une étape 221, l'unité de traitement 5 détermine le seuil d'anomalie $Sa_{(ic)}(D)$, associé à chaque valeur du débit moyen D, à partir des profils de consommation $(\%\Delta t_{s|D(n)}(D))_{1\leq n\leq N}$ de la base de données. Dans ce deuxième mode de réalisation, le seuil d'anomalie est, non pas un scalaire (comme dans le premier mode de réalisation), mais un vecteur qui présente une valeur pour chaque valeur du débit moyen D. Ainsi, chaque valeur du débit moyen D est une 'valeur de référence' à laquelle le profil de consommation courant sera comparé au seuil d'anomalie.

Le seuil d'anomalie $Sa_{(ic)}(D)$ est défini à partir des valeurs $(\%\Delta t_{s|D(n)}(D))_{1\leq n\leq N}$. Il est ici égal à une moyenne $<\%\Delta t_{s|D(n)}(D)>_{1\leq n\leq N}$ en fonction du débit moyen D, à laquelle on a ajouté un coefficient prédéfini. Le coefficient peut être égal à au moins une fois l'écart-type $\sigma_{\%\Delta ts(n)}$(D) associé aux valeurs $(\%\Delta t_{s|D(n)}(D))_{1\leq n\leq N}$, et est ici égal à trois fois l'écart-type. Il peut également comporter un terme dit de tolérance tt, par exemple égal à 0.5% de la durée de surveillance (soit ici 7min et 12s). D'autres définitions du seuil d'anomalie sont évidemment possibles, comme indiqué précédemment en référence à l'étape 121.

Autrement dit, le seuil d'anomalie Sa(D) est défini dans cet exemple par la relation suivante :

$$\forall D, Sa_{(ic)}(D) = \langle \%\Delta t_{s|D(n)}(D) \rangle_{1\leq n\leq N} + \left(3 \times \sigma_{\%\Delta ts(n)}(D) + tt\right)$$

Ensuite, lors des étapes 231 et 232, on acquiert le signal de mesure courant $Sm_{(ic)}$ lors de la durée de surveillance courante $\Delta t_{s(ic)}$, puis on détermine le profil de consommation courant $\%\Delta t_{s|D(ic)}$(D).

Lors de l'étape 231, au cours de la durée de surveillance courante $\Delta t_{s(ic)}$, le dispositif de mesure 4 acquiert le signal de mesure courant $Sm_{(ic)}$.

Lors de l'étape 232, l'unité de traitement 5 détermine ensuite le profil de consommation courant $\%\Delta t_{s|D(ic)}$(D) à partir du signal de mesure courant $Sm_{(ic)}$. Ainsi, l'unité de traitement 5 détermine la durée d'écoulement cumulée $\Delta t_{ec|D(ic)}$ (D) pour chaque valeur du débit moyen $D_{(ic)}$ mesuré, en sommant les durées d'écoulement $\Delta t_{e|D(ic)}$ ayant une même valeur de débit moyen $D_{(ic)}$ mesuré. Puis, elle détermine la proportion en temps d'écoulement $\%\Delta t_{s|D(ic)}$(D) en fonction du débit moyen D.

Ensuite, lors des étapes 241, 242 et 243, on compare le profil de consommation courant $\%\Delta t_{s|D(ic)}$(D) au seuil d'anomalie Sa(D), et on en déduit si une anomalie est présente ou non, pour ensuite éventuellement mettre à jour la base de données BD.

Lors de l'étape 241, on compare les valeurs du profil de consommation $\%\Delta t_{s|D(ic)}(D_s)$ à celles du seuil d'anomalie Sa(D).

S'il existe une valeur $D_s$ du débit moyen pour laquelle la valeur $\%\Delta t_{s|D(ic)}(D_s)$ est au-delà (ici supérieure ou égale) de la valeur correspondante du seuil d'anomalie $Sa_{(ic)}(D_s)$, autrement dit : $\exists D_s / \%\Delta t_{s|D(ic)}(D_s) \geq Sa_{(ic)}(D_s)$, alors le profil de consommation courant montre une consommation d'eau supérieure au seuil, et une anomalie de consommation est alors détectée. Le procédé poursuit à l'étape 242.

Si, au contraire, toutes les valeurs $\%\Delta t_{s|D(ic)}$(D) sont en-deçà (ici inférieures) des valeurs correspondantes du seuil d'anomalie $Sa_{(ic)}$(D), autrement dit : $\forall D, \%\Delta t_{s|D(ic)}(D) < Sa_{(ic)}(D)$, alors le profil de consommation courant ne présente pas une consommation d'eau excessive, et le profil est identifié comme étant sans anomalie de consommation. Le procédé poursuit à l'étape 243.

Les étapes 242 et 243 sont identiques aux étapes 142 et 143 et ne sont pas détaillées à nouveau.

La figure 5 illustre un exemple d'évolutions de profils de consommation $\%\Delta t_{s|D(ic)}$(D) issus de signaux de mesure acquis par le dispositif de mesure 4 au cours d'une journée. Le trait en pointillés correspond à la somme des composantes du seuil d'anomalie $Sa_{(ic)}$(D) de la moyenne et de l'écart-type (donc sans le terme de tolérance), et le trait continu correspond au seuil d'anomalie $Sa_{(ic)}$(D).

Les profils de consommation $\%\Delta t_{s|D}$(D) correspondent donc à la variation en fonction du débit moyen D de la proportion de durée d'écoulement associée à chaque valeur du débit moyen au cours de la durée de surveillance (la journée). Les profils mettent en évidence plusieurs pics de durée d'écoulement, pour certaines valeurs de débit moyen, qui peuvent correspondre à l'utilisation par exemple d'un lave-linge, d'un lave-vaisselle, d'une douche et de la chasse d'eau de toilettes. En définissant un seuil d'anomalie qui varie en fonction du débit moyen, il est alors possible de détecter une anomalie de consommation d'une part, mais également d'identifier le dispositif consommateur qui en est la cause d'autre part.

La figure montre également la variation en fonction du débit moyen de la somme de la moyenne calculée sur les valeurs correspondantes des profils de consommation et de trois fois l'écart-type, ainsi que la variation du seuil d'anomalie. La différence entre ces deux courbes correspond au terme de tolérance.

On remarque que la durée d'écoulement cumulée associée à chaque débit moyen n'excède pas 1 à 2% environ de la durée de surveillance, de sorte que le seuil d'anomalie varie ici entre 0.5 et 1.5% environ. La valeur du seuil d'anomalie est donc bien inférieure à la valeur de 20 à 30% qu'il présente dans le cadre du premier mode de réalisation. La détection des anomalies de consommation est donc plus sensible dans ce deuxième mode de réalisation.

Ainsi, le procédé de détection selon ce deuxième mode de réalisation permet de détecter les anomalies de consommation du système consommateur 1, avec un seuil d'anomalie qui est régulièrement mis à jour et donc qui tient compte de l'évolution de consommation du système consommateur 1. Il présente également une sensibilité plus élevée, et permet d'identifier quel dispositif consommateur serait à l'origine de l'anomalie.

Notons que chaque profil de consommation peut être un histogramme où les valeurs du débit moyen sont réalisées en classes, par exemple d'une largeur de 0.2L/min. Ainsi, le débit moyen varie d'une classe à l'autre : ]0 ; 0.2], ]0.2 ; 0.4], ]0.4 ; 0.6], etc... On somme ainsi les durées d'écoulement $\Delta t_{e|D}$ par classe de débit moyen, pour ainsi obtenir la durée d'écoulement cumulée $\Delta t_{ec|D}$ par classe de débit moyen. Il est avantageux d'effectuer une somme glissante, de sorte que les classes sont partiellement superposées deux à deux, par exemple : ]0 ; 0.4], ]0.2 ; 0.6], ]0.4 ; 0.8], etc... Cette approche permet de préserver les pics de durée d'écoulement dans le cas où un pic serait présent entre deux classes successives. Le seuil d'anomalie peut être calculé sur la base des profils de consommation construits à partir de la somme glissante.

**Revendications**

1. Procédé de détection d'une anomalie de consommation d'un fluide d'intérêt par un système consommateur (1),

    ◦ le système consommateur (1) comportant : au moins un dispositif consommateur (2) du fluide d'intérêt, raccordé à une source (3) par un circuit fluidique ; et

        • un dispositif de mesure (4), raccordé au circuit fluidique entre la source (3) et le dispositif consommateur (2), adapté à mesurer et à transmettre à une unité de traitement (5) un signal de mesure Sm représentatif d'une variation, au cours d'une durée de surveillance $\Delta t_s$ prédéfinie, d'un débit moyen D du fluide d'intérêt et d'une durée d'écoulement $\Delta t_{e|D}$ associée au débit moyen D ;
        • l'unité de traitement (5), adaptée à déterminer à partir du signal de mesure Sm, un profil de consommation correspondant à une variation en fonction du débit moyen D d'un indicateur d'écoulement représentatif d'une proportion $\%\Delta t_s$ d'une durée d'écoulement cumulée $\Delta t_{ec|D}$ du fluide d'intérêt au cours de la durée de surveillance ;

    ◦ le procédé comportant les étapes suivantes :

        ◦ a) fournir (110 ; 210) une base de données comportant une pluralité de profils de consommation préalablement identifiés comme étant sans anomalie de consommation ;
        ◦ b) déterminer (121; 221) un seuil d'anomalie $Sa_{(ic)}$, pour au moins une valeur dite de référence de débit moyen, à partir des profils de consommation de la base de données ;
        ◦ c) acquérir (131; 231), par le dispositif de mesure (4), un signal de mesure $Sm_{(ic)}$ dit courant, au cours d'une durée de surveillance $\Delta t_{s(ic)}$ ;
        ◦ d) déterminer (132 ; 232), par l'unité de traitement (5), un profil de consommation dit courant à partir du signal de mesure $Sm_{(ic)}$ courant ;
        ◦ e) comparer (141 ; 241) le profil de consommation courant au seuil d'anomalie $Sa_{(ic)}$ :

            • si le profil de consommation courant présente, pour au moins une valeur de référence du débit moyen, une valeur en-deçà du seuil d'anomalie $Sa_{(ic)}$ : identifier une absence d'anomalie de consommation et ajouter le profil de consommation courant dans la base de données, puis réitérer les étapes b) à e) pour une durée de surveillance suivante $\Delta t_{s(ic+1)}$ ;
            • si le profil de consommation courant présente, pour au moins une valeur de référence du débit moyen, une valeur au moins au-delà du seuil d'anomalie $Sa_{(ic)}$ : identifier la présence d'une anomalie de consommation et ne pas ajouter le profil de consommation courant dans la base de données, puis réitérer les étapes c) à e) pour une durée de surveillance suivante $\Delta t_{s(ic+1)}$.

2. Procédé de détection selon la revendication 1, dans lequel l'étape de fourniture de la base de données comporte les étapes suivantes :

    ◦ a1) acquérir (111; 211), par le dispositif de mesure (4), un signal de mesure $Sm_{(n)}$ au cours d'une durée de surveillance $\Delta t_{s(n)}$ ;
    ◦ a2) déterminer (112 ; 212), par l'unité de traitement (5), un profil de consommation à partir du signal de mesure $Sm_{(n)}$, identifié comme étant sans anomalie de consommation, et ajouter le profil de consommation déterminé dans la base de données ;
    ◦ réitérer (113 ; 213) les étapes a1) et a2) jusqu'à ce que la base de données comporte un nombre N de profils de consommation au moins égal à un nombre minimal $N_{min}$ prédéfini.

3. Procédé de détection selon la revendication 1 ou 2, dans laquelle, l'étape d'ajout (143 ; 243) du profil de consommation courant dans la base de données comporte une comparaison du nombre N de profils de consommation de la base de données, et si ce nombre N est supérieur à un nombre maximal $N_{max}$ prédéfini, une suppression du profil de consommation associé à la durée de surveillance la plus ancienne.

4. Procédé de détection selon l'une quelconque des revendications 1 à 3, dans lequel l'étape de détermination du profil de consommation comporte une détermination d'une variation, en fonction du débit moyen, de la durée d'écoulement cumulée par addition des valeurs des durées d'écoulement associées à une même valeur de débit moyen.

5. Procédé de détection selon la revendication 4, dans lequel chaque profil de consommation est déterminé au moyen des étapes suivantes :

◦ déterminer une fonction de répartition $F_D(d)$ à partir de la variation de la durée d'écoulement cumulée en fonction du débit moyen, la fonction de répartition indiquant une probabilité $P(D \leq d)$ d'obtenir une valeur du débit moyen D inférieure ou égale à une valeur d ;
◦ définir le profil de consommation comme étant égal à $1-F_D(d)$ ou à $F_D(d)$.

6. Procédé de détection selon la revendication 4, dans lequel chaque profil de consommation est déterminé par calcul d'un rapport de la durée d'écoulement cumulée sur la durée de surveillance, en fonction du débit moyen.

7. Procédé de détection selon l'une quelconque des revendications 1 à 6, dans lequel l'étape de détermination du seuil d'anomalie comporte un calcul d'une moyenne ou d'une médiane des valeurs des profils de consommation de la base de données, pour au moins une valeur de référence prédéfinie du débit moyen.

8. Procédé de détection selon la revendication 7, dans lequel l'étape de détermination du seuil d'anomalie comporte en outre un calcul d'un écart-type associé aux valeurs des profils de consommation de la base de données, pour au moins une valeur de référence prédéfinie du débit moyen.

9. Procédé de détection selon l'une quelconque des revendications 1 à 8, dans lequel le dispositif de mesure comporte un compteur à débitmètre ou un compteur à impulsions.

10. Procédé de détection selon l'une quelconque des revendications 1 à 9, dans lequel le fluide d'intérêt est un liquide ou un gaz, choisi parmi l'eau, l'hydrogène, l'oxygène, l'azote et l'hélium.

11. Procédé de détection selon l'une quelconque des revendications 1 à 10, dans lequel le système consommateur (1) est une maison, un immeuble comportant plusieurs appartements, une usine, un hôpital, une école, un camping.

12. Procédé de détection selon l'une quelconque des revendications 1 à 11, dans lequel le système consommateur (1) comporte une pluralité de dispositifs consommateurs (2), le dispositif de mesure (4) étant raccordé au circuit fluidique entre la source (3) et les dispositifs consommateurs (2).

## Patentansprüche

1. Verfahren zur Erkennung einer Verbrauchsanomalie eines interessierenden Fluids durch ein Verbrauchersystem (1),

◦ wobei das Verbrauchersystem (1) Folgendes aufweist: mindestens eine Verbrauchervorrichtung (2) des interessierenden Fluids, die über einen Fluidkreislauf mit einer Quelle (3) verbunden ist; und

• eine Messvorrichtung (4), die an den Fluidkreislauf zwischen der Quelle (3) und der Verbrauchervorrichtung (2) angeschlossen und geeignet ist, ein Messsignal Sm zu messen und an eine Verarbeitungseinheit (5) zu übermitteln, das eine Variation, während einer vordefinierten Überwachungsdauer $\Delta t_s$, eines mittleren Durchflusses D des betreffenden Fluids und einer mit dem mittleren Durchfluss D verbundenen Strömungsdauer $\Delta t_{e|D}$ repräsentiert;
• die Verarbeitungseinheit (5), die geeignet ist, aus dem Messsignal Sm ein Verbrauchsprofil zu bestimmen, das einer Variation in Abhängigkeit von der mittleren Durchflussrate D eines Durchflussindikators entspricht, der ein Verhältnis $\%\Delta t_s$ einer kumulierten Durchflussdauer $\Delta t_{ec|D}$ des interessierenden Fluids während der Überwachungsdauer repräsentiert;

◦ wobei das Verfahren die folgenden Schritte aufweist:

◦ a) Bereitstellen (110; 210) einer Datenbank, die eine Vielzahl von Verbrauchsprofilen aufweist, die zuvor als ohne Verbrauchsanomalie identifiziert wurden;

◦ b) Bestimmen (121; 221) einer Anomalieschwelle $Sa_{(ic)}$ für mindestens einen Referenzwert der mittleren Durchflussmenge aus den Verbrauchsprofilen der Datenbank;
◦ c) Erfassen (131; 231) eines Strommesssignals $Sm_{(ic)}$ während einer Überwachungsdauer $\Delta t_{S(ic)}$ durch die Messvorrichtung (4);
◦ d) Bestimmen (132; 232), durch die Verarbeitungseinheit (5), eines Stromverbrauchsprofils aus dem Strommesssignal $Sm_{(ic)}$;
◦ e) Vergleichen (141; 241) des aktuellen Verbrauchsprofils mit der Anomalieschwelle $Sa_{(ic)}$:

• wenn das aktuelle Verbrauchsprofil für mindestens einen Referenzwert der durchschnittlichen Durchflussmenge einen Wert aufweist, der unterhalb der Anomalieschwelle $Sa_{(ic)}$ liegt: Identifizieren einer Abwesenheit von Verbrauchsanomalien und Hinzufügen des aktuellen Verbrauchsprofils in die Datenbank, dann Wiederholen der Schritte b) bis e) für eine folgende Überwachungsdauer $\Delta t_{S(ic+1)}$;
• wenn das aktuelle Verbrauchsprofil für mindestens einen Referenzwert der durchschnittlichen Durchflussmenge einen Wert aufweist, der mindestens über der Anomalieschwelle $Sa_{(ic)}$ liegt: Identifizieren des Vorliegens einer Verbrauchsanomalie und nicht Hinzufügen des aktuellen Verbrauchsprofils in die Datenbank, dann Wiederholen der Schritte c) bis e) für eine folgende Überwachungsdauer $\Delta t_{s(ic+1)}$.

**2.** Verfahren zur Erkennung nach Anspruch 1, wobei der Schritt des Bereitstellens der Datenbank die folgenden Schritte aufweist:

◦ a1) Erfassen (111; 211), durch die Messvorrichtung (4), eines Messsignals $Sm_{(n)}$ während einer Überwachungsdauer $\Delta t_{S(n)}$;
◦ a2) Bestimmen (112; 212), durch die Verarbeitungseinheit (5), eines Verbrauchsprofils aus dem Messsignal $Sm_{(n)}$, das als ohne Verbrauchsanomalie identifiziert wurde, und Hinzufügen des bestimmten Verbrauchsprofils in die Datenbank;
◦ Wiederholen (113; 213) der Schritte a1) und a2), bis die Datenbank eine Anzahl N von Verbrauchsprofilen aufweist, die mindestens einer vordefinierten Mindestanzahl $N_{min}$ entspricht.

**3.** Verfahren zur Erkennung nach Anspruch 1 oder 2, wobei der Schritt des Hinzufügens (143; 243) des aktuellen Verbrauchsprofils in die Datenbank einen Vergleich der Anzahl N von Verbrauchsprofilen der Datenbank aufweist, und wenn diese Anzahl N größer ist als eine vordefinierte maximale Anzahl $N_{max}$, ein Löschen des Verbrauchsprofils, das mit der ältesten Überwachungsdauer verbunden ist.

**4.** Verfahren zur Erkennung nach einem der Ansprüche 1 bis 3, wobei der Schritt des Bestimmens des Verbrauchsprofils ein Bestimmen einer Variation, in Abhängigkeit von der durchschnittlichen Durchflussrate, der kumulierten Durchflussdauer durch Addition der Werte der Durchflusszeiten aufweist, die mit demselben durchschnittlichen Durchflusswert verbunden sind.

**5.** Verfahren zur Erkennung nach Anspruch 4, wobei jedes Verbrauchsprofil mittels der folgenden Schritte bestimmt wird:

◦ Bestimmen einer Verteilungsfunktion $F_D(d)$ aus der Änderung der kumulativen Strömungsdauer in Abhängigkeit von dem mittleren Durchfluss, wobei die Verteilungsfunktion eine Wahrscheinlichkeit $P(D \leq d)$ angibt, einen Wert des mittleren Durchflusses D kleiner oder gleich einem Wert d zu erhalten;
◦ Definieren des Verbrauchsprofils als gleich $1-F_D(d)$ oder $F_D(d)$.

**6.** Verfahren zur Erkennung nach Anspruch 4, wobei jedes Verbrauchsprofil durch Berechnen eines Verhältnisses der kumulierten Strömungsdauer zur Überwachungsdauer, in Abhängigkeit von der durchschnittlichen Durchflussrate, bestimmt wird.

**7.** Verfahren zur Erkennung nach einem der Ansprüche 1 bis 6, wobei der Schritt des Bestimmens der Anomalienschwelle das Berechnen eines Mittelwerts oder Medians der Werte der Verbrauchsprofile der Datenbank für mindestens einen vordefinierten Referenzwert der mittleren Durchflussrate aufweist.

**8.** Verfahren zur Erkennung nach Anspruch 7, wobei der Schritt des Bestimmens der Anomalienschwelle ferner eine Berechnung einer Standardabweichung aufweist, die mit den Werten der Verbrauchsprofile der Datenbank für mindestens einen vordefinierten Referenzwert der mittleren Durchflussrate verbunden ist.

**9.** Verfahren zur Erkennung nach einem der Ansprüche 1 bis 8, wobei die Messvorrichtung einen Durchflusszähler oder einen Impulszähler aufweist.

**10.** Verfahren zur Erkennung nach einem der Ansprüche 1 bis 9, wobei das interessierende Fluid eine Flüssigkeit oder ein Gas ist, ausgewählt aus Wasser, Wasserstoff, Sauerstoff, Stickstoff und Helium.

**11.** Verfahren zur Erkennung nach einem der Ansprüche 1 bis 10, wobei das Verbrauchersystem (1) ein Haus, ein Gebäude, das mehrere Wohnungen aufweist, eine Fabrik, ein Krankenhaus, eine Schule, ein Campingplatz ist.

**12.** Verfahren zur Erkennung nach einem der Ansprüche 1 bis 11, wobei das Verbrauchersystem (1) eine Vielzahl von Verbrauchervorrichtungen (2) aufweist, wobei die Messvorrichtung (4) mit dem Fluidkreislauf zwischen der Quelle (3) und den Verbrauchervorrichtungen (2) verbunden ist.

## Claims

**1.** Method for detecting an anomaly in consumption of a fluid of interest by a consuming system (1),

◦ the consuming system (1) comprising: at least one consuming device (2) consuming the fluid of interest and connected to a source (3) by a fluid circuit; and

• a measuring device (4), connected to the fluid circuit between the source (3) and the consuming device (2), capable of measuring and transmitting to a processing unit (5) a measurement signal Sm representing a variation, over the course of a predefined monitoring time $\Delta t_s$, of an average flow rate D of the fluid of interest and of a flow time $\Delta t_{e|D}$ associated with the average flow rate D;
• the processing unit (5), which is adapted to determine, from the measurement signal Sm, a consumption profile corresponding to a variation, as a function of the average flow rate D, of a flow indicator representative of a proportion $\%\Delta t_s$ of a cumulative flow time $\Delta t_{ec|D}$ of the fluid of interest during the monitoring time;

◦ the method comprising the following steps:

◦ a) providing (110; 210) a database comprising a plurality of consumption profiles previously identified as having no consumption anomaly;
◦ b) determining (121; 221) an anomaly threshold $Sa_{(ic)}$, for at least one so-called average flow rate reference value, from the consumption profiles in the database;
◦ c) acquiring (131; 231), using the measuring device (4), a so-called current measurement signal $Sm_{(ic)}$, over the duration of a monitoring time $\Delta t_{S(ic)}$;
◦ d) determining (132; 232), using the processing unit (5), a so-called current consumption profile from the current measurement signal $Sm_{(ic)}$;
◦ e) comparing (141; 241) the current consumption profile to the anomaly threshold $Sa_{(ic)}$:

• if the current consumption profile has, for at least one average flow rate reference value, a value below the anomaly threshold $Sa_{(ic)}$: identifying that no consumption anomaly is present and adding the current consumption profile to the database, then repeating steps b) to e) for a subsequent monitoring time $\Delta t_{S(ic+1)}$;
• if the current consumption profile has, for at least one average flow rate reference value, a value at least above the anomaly threshold $Sa_{(ic)}$: identifying that a consumption anomaly is present and not adding the current consumption profile to the database, then repeating steps c) to e) for a subsequent monitoring time $\Delta t_{S(ic+1)}$.

**2.** Detection method according to claim 1, wherein the step of providing the database comprises the following steps:

◦ a1) acquiring (111; 211), using the measuring device (4), a measurement signal $Sm_{(n)}$ for the duration of a monitoring time $\Delta t_{S(n)}$;
◦ a2) determining (112; 212), using the processing unit (5), a consumption profile from the measurement signal $Sm_{(n)}$, identified as having no consumption anomaly, and adding the determined consumption profile to the database;
◦ repeating (113; 213) steps a1) and a2) until the database comprises a number N of consumption profiles at least equal to a predefined minimum number $N_{min}$.

3. Detection method according to claim 1 or 2, wherein the step (143; 243) of adding the current consumption profile to the database comprises comparing the number N of consumption profiles in the database, and if this number N is greater than a predefined maximum number $N_{max}$, deleting the consumption profile associated with the least recent monitoring time.

4. Detection method according to any one of claims 1 to 3, wherein the step of determining the consumption profile comprises determining a variation, as a function of the average flow rate, of the cumulative flow time by adding the values of the flow times associated with a same average flow rate value.

5. Detection method according to claim 4, wherein each consumption profile is determined by carrying out the following steps:

   ◦ determining a distribution function $F_D(d)$ from the variation of the cumulative flow time as a function of the average flow rate, the distribution function indicating a probability $P(D \leq d)$ of obtaining a value of the average flow rate D that is less than or equal to a value d;
   ◦ defining the consumption profile as being equal to $1-F_D(d)$ or to $F_D(d)$.

6. Detection method according to claim 4, wherein each consumption profile is determined by calculating a ratio of the cumulative flow time over the monitoring time, as a function of the average flow rate.

7. Detection method according to any one of claims 1 to 6, wherein the step of determining the anomaly threshold comprises calculating an average or a median of the values of the consumption profiles of the database, for at least one predefined reference value of the average flow rate.

8. Detection method according to claim 7, wherein the step of determining the anomaly threshold further comprises calculating a standard deviation associated with the values of the consumption profiles of the database, for at least one predefined reference value of the average flow rate.

9. Detection method according to any one of claims 1 to 8, wherein the measuring device comprises a flow meter or a pulse counter.

10. Detection method according to any one of claims 1 to 9, wherein the fluid of interest is a liquid or a gas, chosen from water, hydrogen, oxygen, nitrogen, and helium.

11. Detection method according to any one of claims 1 to 10, wherein the consuming system (1) is a house, a building comprising several apartments, a factory, a hospital, a school, or a campsite.

12. Detection method according to any one of claims 1 to 11, wherein the consuming system (1) comprises a plurality of consuming devices (2), the measuring device (4) being connected to the fluid circuit between the source (3) and the consuming devices (2).

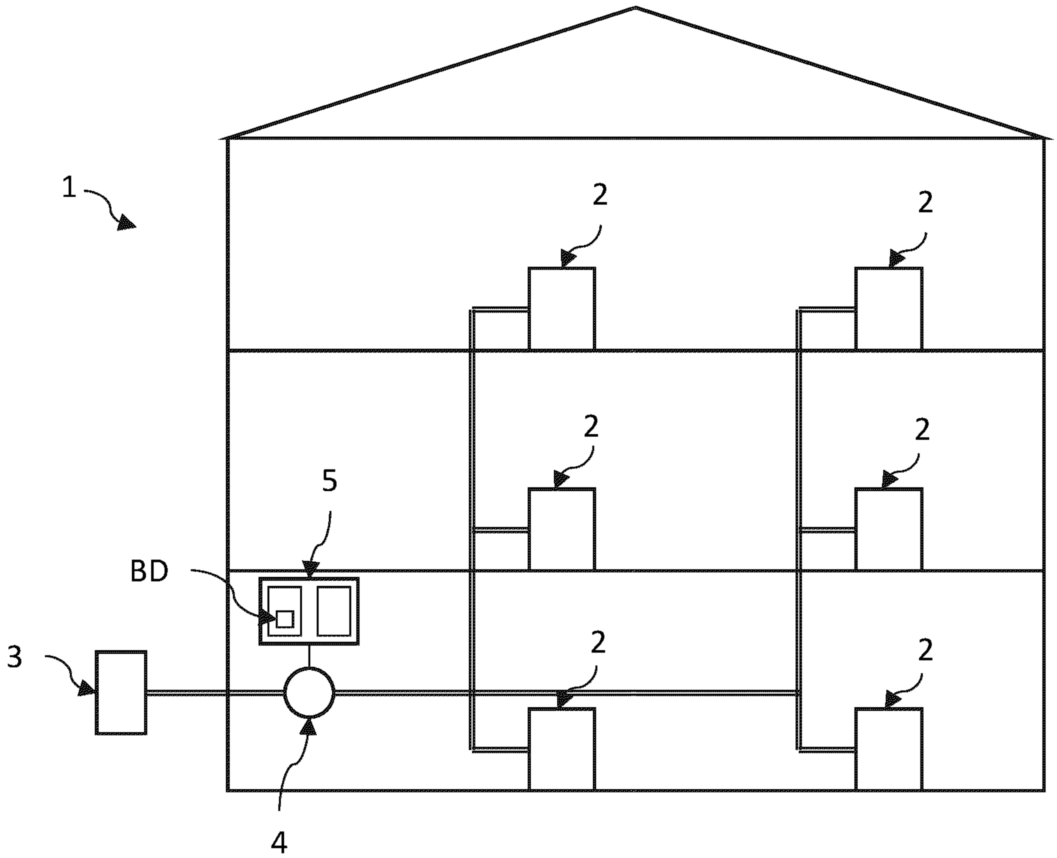


Fig.1

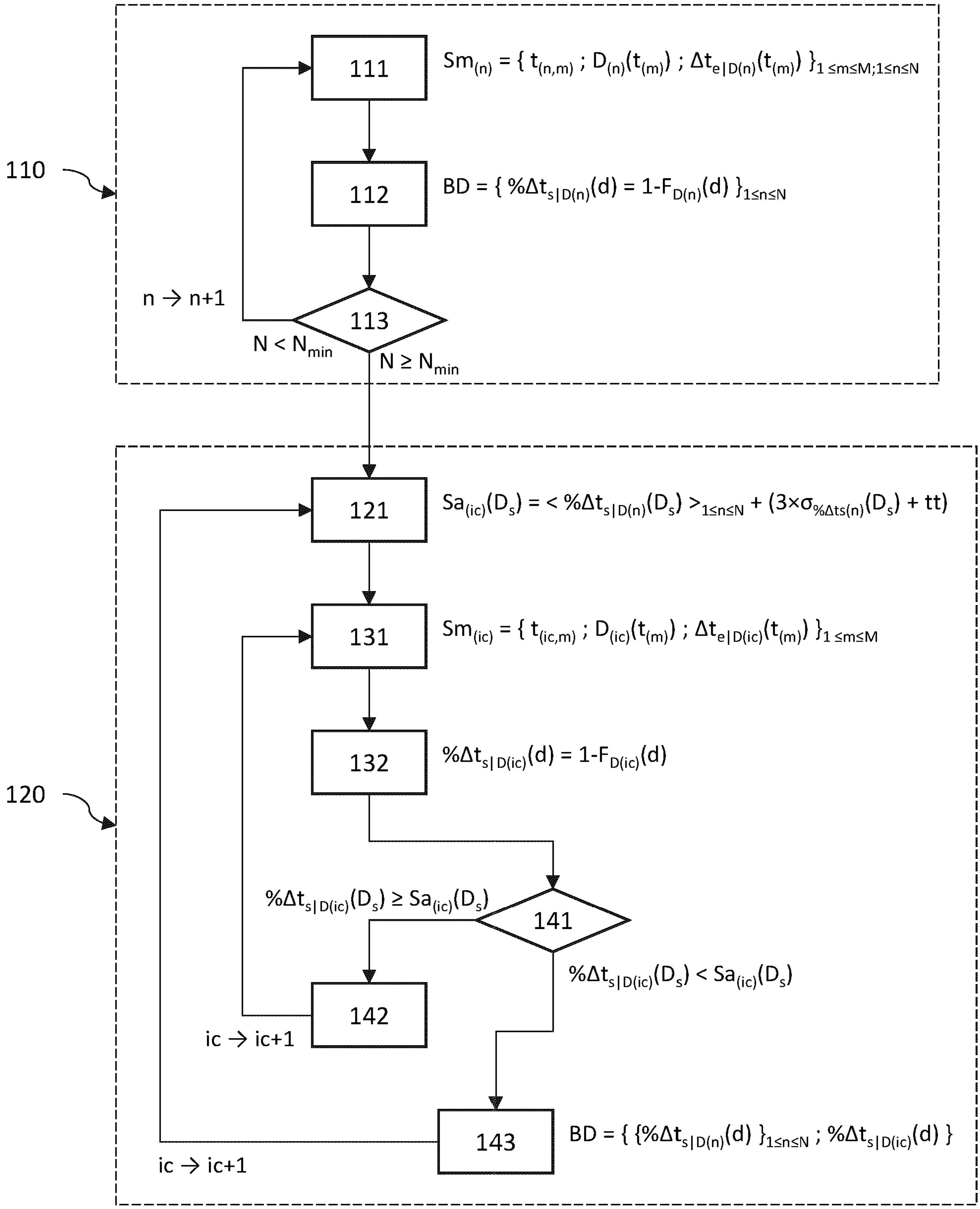
110
111
$Sm_{(n)} = \{ t_{(n,m)} ; D_{(n)}(t_{(m)}) ; \Delta t_{e|D(n)}(t_{(m)}) \}_{1 \leq m \leq M; 1 \leq n \leq N}$
112
$BD = \{ \%\Delta t_{s|D(n)}(d) = 1-F_{D(n)}(d) \}_{1 \leq n \leq N}$
113
n → n+1
$N < N_{min}$
$N \geq N_{min}$
120
121
$Sa_{(ic)}(D_s) = < \%\Delta t_{s|D(n)}(D_s) >_{1 \leq n \leq N} + (3 \times \sigma_{\%\Delta ts(n)}(D_s) + tt)$
131
$Sm_{(ic)} = \{ t_{(ic,m)} ; D_{(ic)}(t_{(m)}) ; \Delta t_{e|D(ic)}(t_{(m)}) \}_{1 \leq m \leq M}$
132
$\%\Delta t_{s|D(ic)}(d) = 1-F_{D(ic)}(d)$
141
$\%\Delta t_{s|D(ic)}(D_s) \geq Sa_{(ic)}(D_s)$
$\%\Delta t_{s|D(ic)}(D_s) < Sa_{(ic)}(D_s)$
142
ic → ic+1
143
$BD = \{ \{\%\Delta t_{s|D(n)}(d) \}_{1 \leq n \leq N} ; \%\Delta t_{s|D(ic)}(d) \}$
ic → ic+1

**Fig.2**

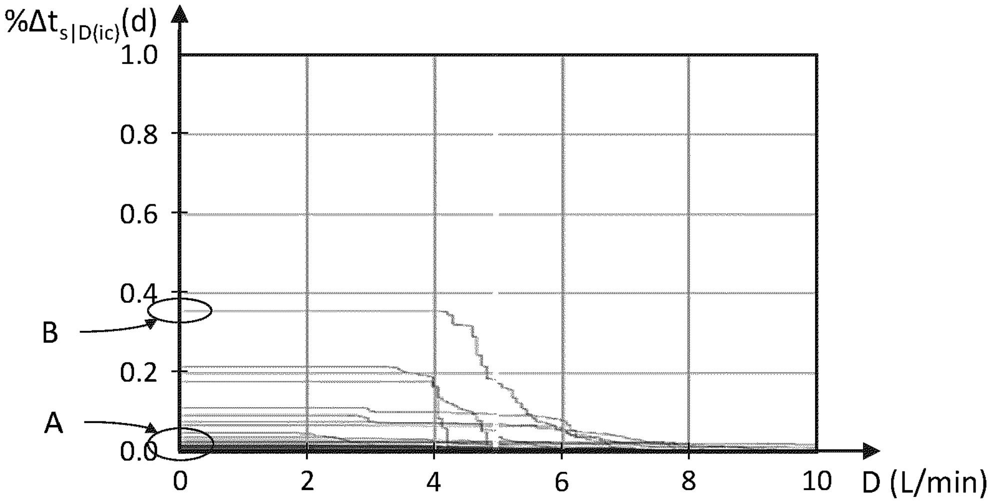


Fig.3A

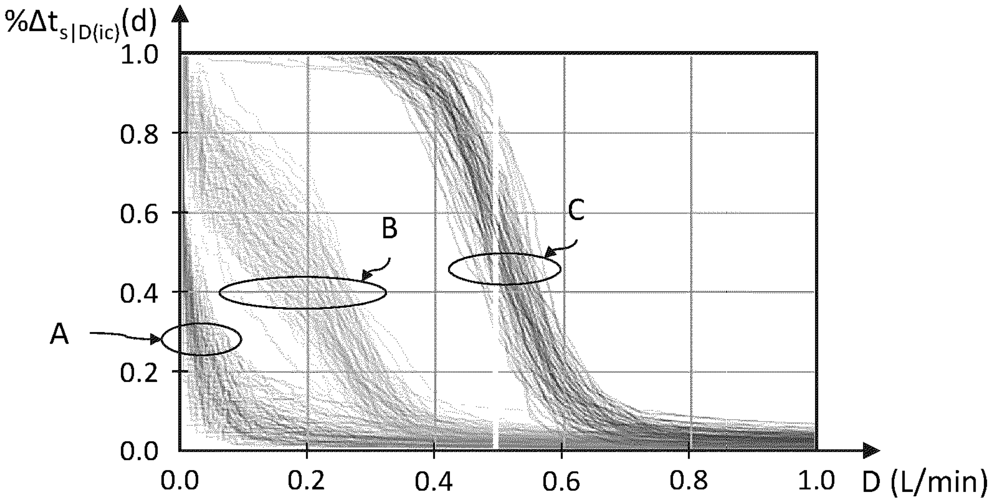


Fig.3B

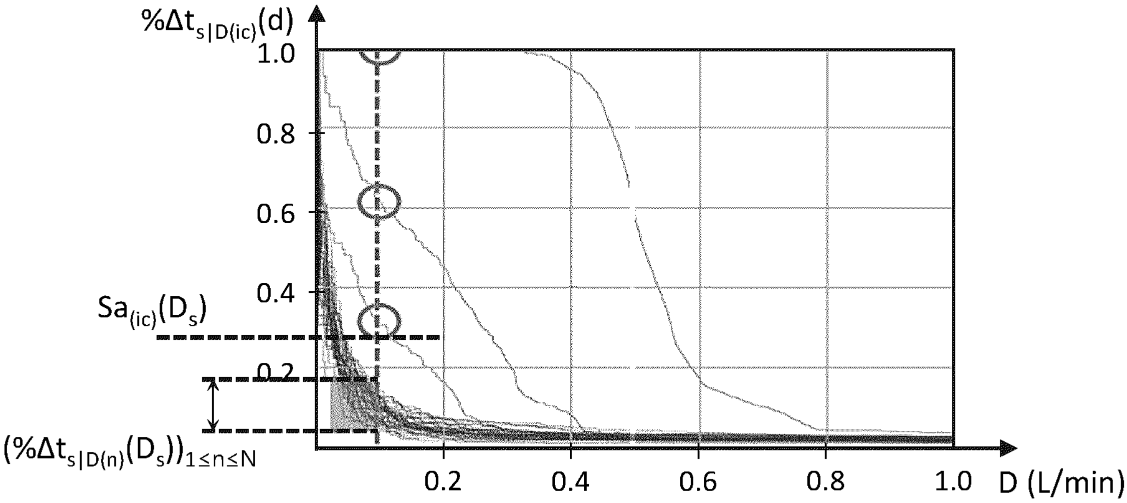


Fig.3C

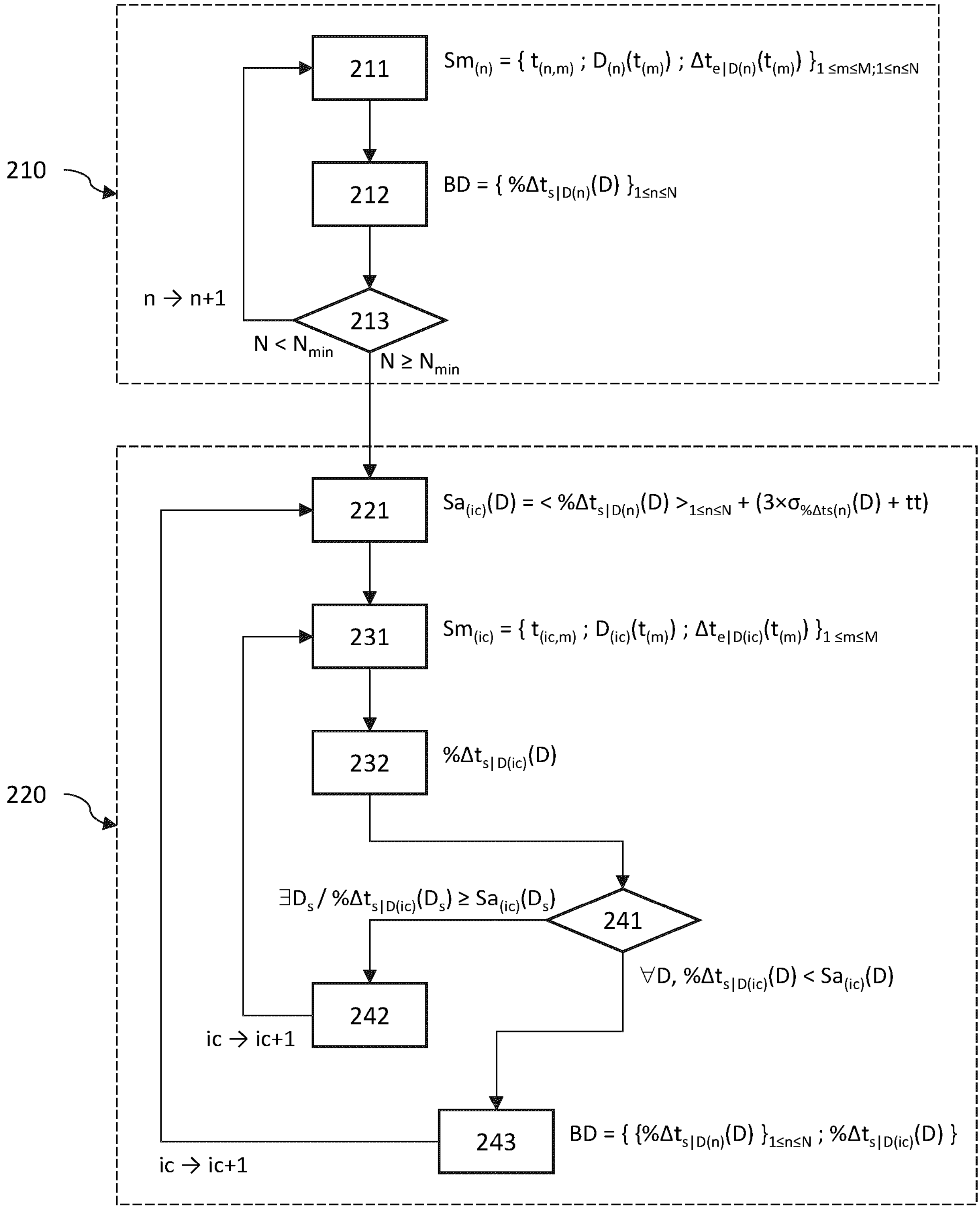
210
211
$Sm_{(n)} = \{ t_{(n,m)} ; D_{(n)}(t_{(m)}) ; \Delta t_{e|D(n)}(t_{(m)}) \}_{1 \leq m \leq M; 1 \leq n \leq N}$
212
$BD = \{ \%\Delta t_{s|D(n)}(D) \}_{1 \leq n \leq N}$
n → n+1
213
$N < N_{min}$
$N \geq N_{min}$
220
221
$Sa_{(ic)}(D) = < \%\Delta t_{s|D(n)}(D) >_{1 \leq n \leq N} + (3 \times \sigma_{\%\Delta ts(n)}(D) + tt)$
231
$Sm_{(ic)} = \{ t_{(ic,m)} ; D_{(ic)}(t_{(m)}) ; \Delta t_{e|D(ic)}(t_{(m)}) \}_{1 \leq m \leq M}$
232
$\%\Delta t_{s|D(ic)}(D)$
$\exists D_s / \%\Delta t_{s|D(ic)}(D_s) \geq Sa_{(ic)}(D_s)$
241
$\forall D, \%\Delta t_{s|D(ic)}(D) < Sa_{(ic)}(D)$
242
ic → ic+1
243
$BD = \{ \{\%\Delta t_{s|D(n)}(D) \}_{1 \leq n \leq N} ; \%\Delta t_{s|D(ic)}(D) \}$
ic → ic+1

**Fig.4**

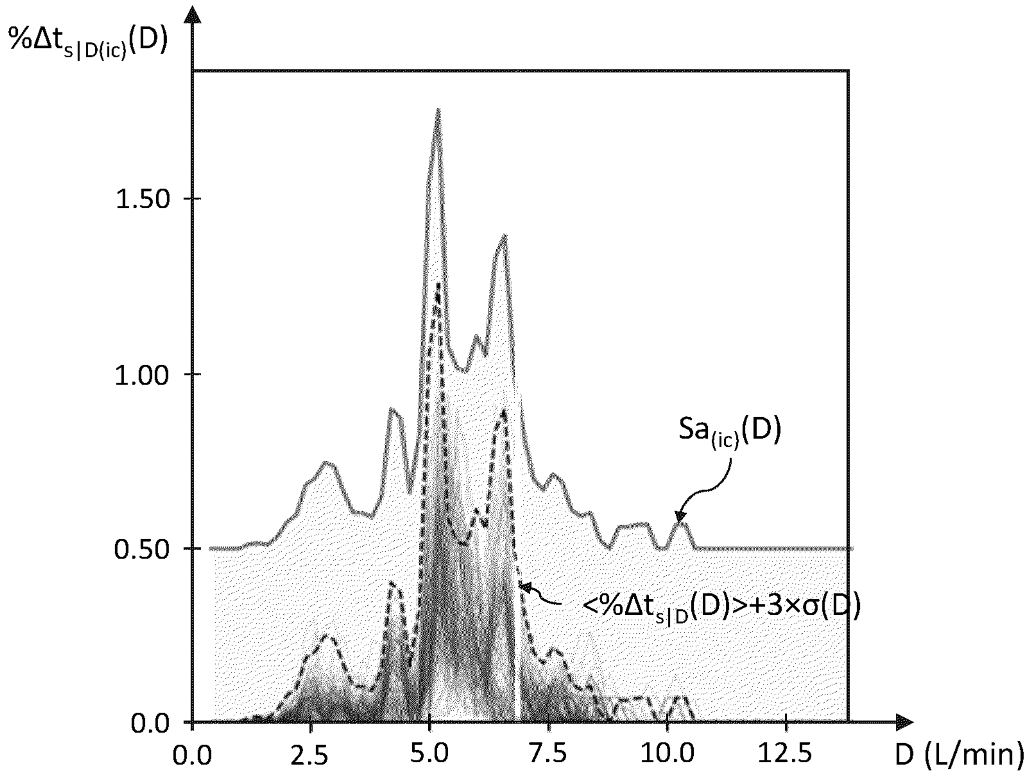
%Δt s|D(ic)(D)
1.50
1.00
0.50
0.0
0.0
2.5
5.0
7.5
10.0
12.5
D (L/min)
Sa(ic)(D)
<%Δt s|D(D)>+3×σ(D)

**Fig.5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 2018143056 A1
- WO 2007059592 A1
- CN 105185051 A